# EUROPEAN PATENT APPLICATION

(11) **EP 2 720 207 A1**
(43) Date of publication of application: **16.04.2014**
(21) Application number: 13182707.3
(22) Date of filing: 02.09.2013
(51) Int. Cl.: G07F 17/32, A63F 13/30

(54) **Game system for various type apparatus**

(30) Priority: 09.10.2012 JP 2012224194
(71) Applicant: IO Interactive A/S, 1560 Copenhagen V (DK)
(72) Inventor: Krogh, Kim, DK-1560 Copenhagen V (DK)
(74) Representative: Pitchford, James Edward

(57) **Abstract**

The game system has at least one shared database which may be shared by various games. The database stores accumulated data for the first online game and the accumulated data may reflect game scenarios of the second online game. For example, the user of the first online game, which is an online game for personal computers, can play the second online game by means of mobile apparatus during commuting times. The result of the second online game may reflect the situations or conditions of the first online game. The players can feel playing their favourite game even when they cannot use their personal computers.

## Description

### FIELD OF THE INVENTION

The present invention relates to a game system which can share game data among various types of game apparatus and game scenarios.

### BACKGROUND OF THE INVENTION

JP 4484900 B discloses a system for advertising through a game network.

JP 2012-085834A discloses an online game system.

### PRIOR ART DOCUMENTS

### PATENT DOCUMENTS

Patent Document 1: JP 4484900 B
Patent Document 2: JP 2012-085834A

### SUMMARY OF THE INVENTION

### PROBLEM

Users of the online game sometimes desire to play game not only when they are at home but also when they are on trains or on buses. However, the game could be played by a fixed apparatus and thus it was impossible to play the online game without a specific game apparatus.

### MEANS FOR SOLVING THE PROBLEM

The present invention basically based on the following concept. The game system has at least one shared database which may be shared by various games. The database stores accumulated data for the first online game and the accumulated data may reflect game scenarios of the second online game. For example, the user of the first online game, which is an online game for personal computers, can play the second online game by means of mobile apparatus. The result of the second online game may reflect the situations or conditions of the first online game. The players can feel playing their favourite game even when they cannot use their personal computers.

The first aspect of the invention relates to a game system. The game system comprises a first online game server 11. The first online game server 11 provides a first online game to a first type of apparatus 13a, 13b through a communication network 15.

The first server comprises a first database 16 which stores a first user's ID and the first user's game data related to the first user's ID. The game data is used in the first online game. As explained later, whole or a part of the game data is also used in the second online game.

The game system 1 further comprises a second online game server 21 and the second online game server 21 provides a second online game to a second type of apparatus 22a, 22b, 22c. The first user's game data is used in the second online game. Because the system of the invention has above features, the first user's game data is shared by the first online game and the second online game.

Preferred embodiment of the invention is that the first type of apparatus 13a, 13b are personal computers, apparatus for arcade games, or game apparatus for home products and the second type of apparatus 22a, 22b, 22c are mobile terminal apparatus. The second type of apparatus 22a, 22b, 22c may be are mobile terminal apparatus that comprise a GPS part and the first online game uses the GPS data.

Preferred embodiment of the invention is that the first user's game data comprises experience data or game money which increases by playing either the first online game or the second online game.

Preferred embodiment of the invention is that the first online game and the second online game share a player character and the first user's game data which comprises current situation of the player character.

Preferred embodiment of the invention is that the first online game and the second online game share a first non-player character and the first user's game data which comprises current situation of the first non-player character.

Preferred embodiment of the invention is that the first online game and the second online game provide contracts that are used in the first online game and the second online game based on information which comprises accomplishments and statistics of the user. The first user's game data comprises the first user's accomplishments, and the first user's statistics. Then the contracts reflect progressiveness of the first online game and the second online game provide.

### TECHNICAL EFFECT

The system can provide a plurality of game scenarios and data that is used in the scenarios. The user of the first online game can progress the first online game by playing the second online game which may be played by means of mobile terminals.

### BRIEF DESCRIPTION OF THE DRAWINGS

Fig. 1 is a block diagram of an embodiment of the invention.
Fig. 2 is a block diagram for illustrating a configuration example of a computer.

### BEST MODE FOR CARRYING OUT THE INVENTION

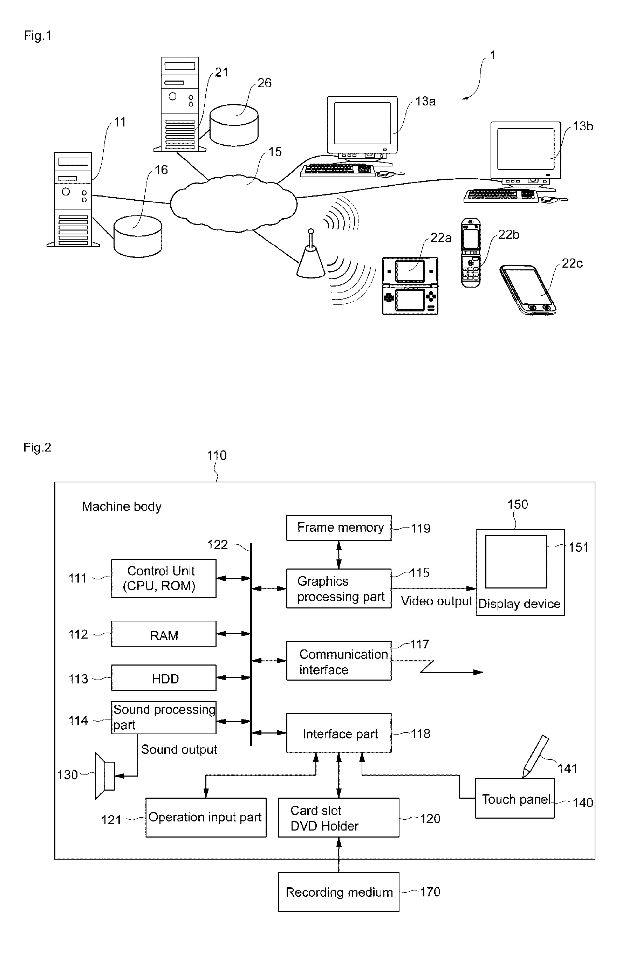

Figure 1 is a block diagram of an embodiment of the invention. As shown in the figure 1, the system has the first online game server 11 which has a first database 16 and the second online game server 21. The first online game server 11 is connected to the first type of apparatus 13a, 13b through the communication network 15. The example of the communication network 15 is an internet network. The first online game server 11 can provide necessary information to play the first online game with the first type of apparatus 13a, 13b. A part of game data to play the first online game may be stored in a memory of the first type of apparatus 13a, 13b.

The second online game server 21 provides a second online game to the second type of apparatus 22a, 22b, 22c. One server may acts as the first online game server 11 and the second online game server 21. A plurality of server computers may act as the first online game server 11 and second online game server 21. The first user's game data is used in the first online game as well as in the second online game. The game program of the second online game is different from that of the first online game even though both games share at least part of game data. The program of the first online game is prepared only for the first type of apparatus. Thus, in some cases, the second type of apparatus 22a, 22b, 22c cannot play the first online game even if they download information of the first online game. However the title of the second online game may share a part of the title of the first online game. Because the system of the invention has above features, the first user's game data is shared by the first online game and the second online game.

The first type of apparatus 13a, 13b and the second type of apparatus 22a, 22b, 22c may be same and the program of the first online game and the program of the second online game may be different. However preferred embodiment of the invention is that the first type of apparatus 13a, 13b are personal computers, apparatus for arcade games, and game apparatus for home products and the second type of apparatus 22a, 22b, 22c are mobile terminal apparatus. The second type of apparatus 22a, 22b, 22c may be mobile terminal apparatus that comprise a GPS part and the first online game uses the GPS data. When the first online game player plays the second online game using the second type of apparatus 22a, 22b, 22c, the second online game server receives current position of the second type of apparatus by means of GPS part. Namely, GPS part generates the positional data of the second type of apparatus and the second type of apparatus sends the positional data to the second online game server. The second online game server stores the positional data in the second online game database. Further the second online game server sends the positional data to the first online game server. Then the first online game server stores the positional data of the second type of game apparatus relating to the user's ID. Then the first online game server calculates both or one of the movement length and movement speeds of the second type game apparatus by reading the positional data at regular intervals, for example. Then the first online game calculates additional experience by comparing thresholds of movements or speeds which are calculated by using GPS data. The first online game server adds the calculated additional experience to the experience of the first user.

The apparatus for arcade games are apparatus for games at game arcades or amusement arcades. Such apparatus for arcade games are connected to the first online game server through the network. The game apparatus for home products are apparatus targeted mainly to playing games at home. Examples of such game apparatus for home products are Family Computer (trademark), Super Family Computer (trademark), PlayStation (trademark), PlayStation 2 (trademark), PlayStation 3 (trademark), Wii (trademark), and X box (trademark).

The mobile terminal apparatus are game apparatus that are different form the first type of apparatus. Examples of mobile terminal apparatus are mobile phones, and PDAs. Other examples of mobile terminal apparatus are Nintendo (Trademark) DS, Nintendo (Trademark) 3DS, and PlayStation Portable (trademark).

The first server comprises the first database 16 which stores a first user's ID and the first user's game data related to the first user's ID. The game data is used in the first online game.

### Example 1

The first user's game data may comprise experience data or game money which increases by playing the first online game and the second online game.

The first type of apparatus, such as Wii(Trademark), has the media, such as a DVD, that stores game program "Dragon X". The program is configured to be read only by means of the specific game apparatus. The apparatus can read game information by reading the program from the media and can show graphics for games at the monitor which is connected to the game apparatus. Using the program, the player can play the game "Dragon X" by means of the first type of apparatus.

Part of game data may be stored at the memory of the first type of apparatus. One preferred embodiment is that the first type of apparatus of the first user which plays "Dragon X" connects with the first online game server. When the user inputs his information relates to "Dragon X", the pointing device of the first type of apparatus inputs the information into the memory of the first type of apparatus and sends the information to the first online game server. Then the first online game server stores his ID and his information that may include his nickname in the first database 16. Other information of the user is his birthday and his age. Then he can produce his character or his avatar in "Dragon X". The information of his avatar, which is shown in his game apparatus, may be stored in the first database 16 in connection with his ID. Then using his ID the first sever can read the information of his nickname and his avatar. Thus the first type of apparatus can display his nickname and his avatar at the monitor.

Once he plays "Dragon X" by means of the first type of apparatus at his house, he can obtain gold, which is the currency used in "Dragon X", and experience when "Dragon X" is a so called RPG, role playing game. For example, his player A has 500 Gold and has EXP of 500 after he plays "Dragon X". Such information is stored at the first database relating to his ID. The game programs and systems for such RPG are part of the state of the art and it is possible for the invention to use such programs and systems.

After he plays "Dragon X", he decides to go to school. On train, he can access the second online game server 21 which provides "Dragon X mobile" by means of his mobile phone. "Dragon X" and "Dragon X mobile" may share the information of the player character and whole or a part of non-player characters, which are stored in the first database. The second online game server 21 may have a second database 16 to store information. A part of game information to play "Dragon X mobile" may be stored at the memory of his mobile phone. After his mobile phone reads the information to play "Dragon X mobile" from the memory and access the second online game server 21 he can play "Dragon X mobile".

He inputs his information and password into his mobile phone by means of the input device such as keypads. Then the mobile phone stores the information at its memory and sends his information and password to the second online game server 21. The second online game server 21 sends his information and password to the first online game server 11 and the first online game server 11 reads his information from the first database using his ID. Then the first server sends his game data that includes information of Character A, 500 Gold and EXP 500 to the second online game server 21. The second online game server 21 provides his mobile phone with information of Character A, 500 Gold and EXP 500 in a manner or format that his mobile phone can recognize them.

When the mobile displays the character A, it is possible for the mobile phone to display the character A after lessening the graphic quality. The second online game server 21 may have a part that can lessen the graphic quality and lessen the size of characters such that mobile apparatus can display game characters.

He can start "Dragon X mobile" with the character A which has 500 Gold and EXP 500 in the world of "Dragon X mobile". He feels that the mobile apparatus is linked with "Dragon X" even though the platform of "Dragon X mobile" is different form that of "Dragon X" and his mobile phone cannot implement "Dragon X" because "Dragon X" is programmed only for personal computers. After he plays "Dragon X mobile" during his commute hours, the character A becomes to have 750 Gold and have EXP of 700. Such information is stored at the first database through the game system. Thus when he plays "Dragon X" by means of the first type of apparatus he can start "Dragon X" with the character A who has 750 Gold and has EXP of 700.

### EXAMPLE 2

The second example relates to game "Hitman (Trademark)" and "Hitman (Trademark) mobile". The program "Hitman (Trademark)" is configured to be read by personal computer or Playstation (Trademark) II. Users who have a personal computer or Playstation (Trademark) II can play "Hitman (Trademark)". Users who have mobile phones or mobile game apparatus, such as Nintendo 3DS (Trademark) can play "Hitman (Trademark) mobile" even though such mobile game apparatus cannot implement "Hitman (Trademark)". Such mobile users have downloaded the program of "Hitman (Trademark) mobile" such that they play "Hitman (Trademark) mobile". "Hitman (Trademark)" and "Hitman (Trademark) mobile" are configured to have a link. The games have common chapters and a plurality of non-player characters. At each chapter the each game offers one of plurality of contracts that contains the conditions. Example of the contents of such a contract is the target whom the player character is requested to assassinate or kill and the rewards.

Both "Hitman (Trademark)" and "Hitman (Trademark) mobile" are programs that a player character is given a set of objectives to complete. Most levels require the assassination of one or more people. The first online game server stores non-player characters in each level or each chapter. The first type of apparatus can read such information and thus the system can provide the first type of game apparatus with the game which can provide a scenario with contracts including the targeted non-player character.

The game can provide a variety of ways to complete missions. Usually, the game requires the player character to terminate the target in silence. The player character is configured to run, set trap, move slowly, jump, change sight, turn around and duck. Some missions have assassination possibilities unique to the level. The player character can find disguises or remove them from an incapacitated person to blend in with his surroundings and access restricted areas.

"Hitman (Trademark)" can provide users with a status based on score or how he completed the missions. When the player character can complete a mission without being noticed by anyone and the player character kills only the targets then the player character can get the status of "Silent Assassin". The first online game server counts how many non-player character the first online game character killed to complete a mission and how he completed the mission. The first database stores the threshold of the status. After the player character has completed one mission, the first online game server starts to select or decide his status at the mission. The first online game server reads the thresholds from the first online game server and compares the conditions he attained and the thresholds. Then the first online game server can decide the status at the mission of the first online game character.

The first database is configured to store the first user's ID, accomplishments, unlocks and statistics. The first user can use the data to "Hitman (Trademark)" and "Hitman (Trademark) mobile". For example, when the first user clears the first chapter, the personal computer sends the clear information to the first online game server. Then the first online game server stores the clear information into the first database related to the first user's ID. After that, when the first user plays "Hitman (Trademark) mobile" by means of his mobile phone, his mobile phone accesses the second online game server. The second online game server accesses the first online game server such that the clear data is read from the first online game database. The first online game server sends the clear information to the second online game server and the second online game server sends the clear information to the mobile phone. Then the mobile phone shows the "Hitman (Trademark) mobile" from the chapter 2, the next chapter he has cleared.

Examples of Accomplishments are Ratings, Achievements and Progress. Examples of Unlocks are Disguises, Weapons, Techniques achieved. Example of Statistics are how many the player has killed, how many bodies the player has disposed, how many seconds the player have spend.

"Hitman (Trademark) mobile" may provide a mini game that relates to "Hitman (Trademark)". For example, when "Hitman (Trademark)" sets "levels of Sniper" then "Hitman (Trademark) mobile" may provide a game of "Hitman (Trademark) mobile" that relates to Sniper. By playing "Hitman (Trademark) mobile", the player can increase experiment of Sniping and improve the player's level of Sniper that is used in "Hitman (Trademark)".

To attain this, the first online game server may be configured to store the experiment of Sniping relating to the first user's ID and thresholds of levels. When the first player plays "Hitman (Trademark)", his personal computer can obtain the information of the player character's experience relating to Sniping or level of Sniper. Then the player can play the game "Hitman (Trademark)" with the player character that has predetermined level of Sniper, e.g., Sniper Level 2. After he plays the "Hitman (Trademark)" and the player character accumulates experience of Sniping and exceeds the threshold of level 3, the personal computer or the first online game server decides that the player character becomes Sniper level 3 by comparing the threshold and the accumulated experience data of Sniping. Then the first online game server stores the first character's experience data of Sniping and Sniper level of 3. Next the first player plays "Hitman (Trademark) mobile", he can start the game with the first player character that has Sniper level of 3.

The preferred embodiment is that the first online game and the second online game have a link. For example, "Hitman (Trademark)" and "Hitman (Trademark) mobile" are configured to have a link. Both games have a plurality of scenarios and progress of one game reflects the scenarios of another.

The first online game and the second online game may share a player character and the first user's game data comprises current situation of the player character.

The first online game and the second online game may share a first non-player character and the first user's game data comprises current situation of the first non-player character.

Table 1 shows an example of Non-player characters in "Hitman (Trademark)" and "Hitman (Trademark) mobile". As shown in the table 1, both games share a plurality of Non-player characters. The information of Non-player characters may be stored in the first online game database. Other embodiment is that the information of Non-player characters for "Hitman (Trademark)" is stored in the first online game database and the information of Non-player characters for "Hitman (Trademark) mobile" is stored in the second online game database.

**[Table 1]**

| | Hitman™ | Hitman™ mobile | STATUS |
|---|---|---|---|
| 1 | NA | NA | Normal |
| 2 | NB | NB | Injured |
| 3 | NC | - | Normal |
| 4 | ND | ND | Dead |
| 5 | NE | - | Dead |
| 6 | NF | NF | Normal |
| 7 | NG | NG | Dead |

When the first online game player plays "Hitman (Trademark)" by means of his personal computer his player character A injures non-player character NB and assassinates non-player character ND. Then the information is stored in the first online game server. When the first online game player plays "Hitman (Trademark) mobile" reads the information that the player character A injures non-player character NB and assassinates non-player character ND. The second online game server give a scenario by using the information the player character A injures non-player character NB and assassinates non-player character ND. For example, the second server stores a plurality of scenarios which comprises information of non-player characters and the second server selects scenario in which non-player character ND has been assassinated. Further when the second server provides game information to the mobile phone of the first online game player, then the non-player character NB is injured.

For example, when the first online game player plays "Hitman (Trademark)" by means of his personal computer of 5th contract, which request the player character to kill one target, the player character A completes the contract. However, non-player character NE watched the player character to kill the target. Then the first online game player cannot obtain the status of "the Silent Assassin" because the player character failed to kill the target completely in silent. The result is sent to the first online game server and it stores the result into the first online game database.

When the first user plays "Hitman (Trademark) mobile" by means of his mobile apparatus, the apparatus accesses the second online game server. Then the second online game server obtains the result of the 5th contract and cleats a new contract to assassinate the non-player character NE. Namely, when a player character was found by non-player character in playing "Hitman (Trademark)", then "Hitman (Trademark) mobile" uses the information to create a new contract which requests the player character to assassinate the non-player character.

When the first online game player plays "Hitman (Trademark)" by means of his personal computer and he almost perfectly completed level 2 but one NPC saw his player character A and the NPC survives; the first online game player failed to attain the best title, the Silent Assassin score.

When the first online game player plays "Hitman (Trademark)" by means of his personal computer and he almost perfectly completed level 4 but his player character A made noise or failed to access the target silently; the first online game player failed to attain the best title, the Silent Assassin score. Then the personal computer stores the conditions. Then the personal computer sends the conditions that comprises information of level 4 and failed to access the target silently to the first online game server. Then the first online game server stores the condition into the first online game server relating to the first user's ID. Then the first online game server forwards the condition to the second online game server. After that the second online game server creates a new scenario. The scenario relates to training of silent walk. When the first player plays "Hitman (Trademark) mobile" by means of his mobile phone, then the second online game server provides his mobile phone with the additional new game. After he selects the new game the player moves slowly. Following his movement, his mobile phone moves slowly. Then the GPS of the mobile accumulates the trace of his mobile phone. His mobile phone sends the trace to the second online game server. Then the second online game server calculates the speed of the movement. The second online game server reads the threshold of speed and decides whether the speed is over the threshold or not. When the second online game server decides that the speed is slow enough to over the threshold then the second online game server may create experience or additional level regarding silent walk, one of the factors used in the games. Then the second online game server sends the created experience or additional level regarding "silent walk" to the first online game server. The first online game server renews the information of the first online game player by adding the experience or level regarding "silent walk" and stores them in the first online game database. Then the first online game player's weak point may somewhat be overcome.

Preferred embodiment of the invention is that the first online game and the second online game provide contracts that are used in the online game and the second online game provide based on information which comprises accomplishments and statistics of the user. The first user's game data comprises the first user's accomplishments, and the first user's statistics. Then the contracts reflect progressiveness of the first online game and the second online game provide.

The invention provides a program that makes a computer act as a game system 1 which comprises a first online game server 11 which provides a first online game to a first type of apparatus 13a, 13b through a communication network 15. The first server comprises a first database 16 which stores a first user's ID and the first user's game data related to the first user's ID, the game data being used in the first online game. The game system 1 further comprising a second online game server 21 which provides a second online game to a second type of apparatus 22a, 22b, 22c and the first user's game data is used in the second online game.

The invention further provides a computer readable memory which contains the above program.

The invention also provides a method for the sharing game data between two or more game apparatus.

Fig. 2 is a block diagram for illustrating a configuration example of a computer. The client computer 13a, 13b may comprise the configuration shown in the figure 2. The second game apparatus 22a, 22b, 22c may have similar elements. The operation input part 121 is composed of power switches such as a power switch and keys such as a cross key.

The circuit placed within the machine body 110 comprises a control unit 111, a RAM 112, a hard disc drive (HDD) 113, a sound processing part 114, a graphics processing part 115, a communication interface 117, an interface part 118, a frame memory 119, and a card slot 120. The control unit 111, the RAM 112, the hard disc drive (HDD) 113, the sound processing part 114, the graphics processing part 115, the communication interface 117, and the interface part 118 are each connected to an internal bus 122.

The control unit 111, comprising a CPU, a ROM, etc., controls the entire game machine 100 in accordance with the control program stored in the HDD 113 or a recording medium 170. The control unit 111 is provided with an internal timer which is used, for example, to generate timer interrupts. The RAM 112 is also used as a working area for the control unit 111.

The sound processing part 114, provided with a sound input/output interface function for performing D/A and A/D conversion of sound signals, is connected to a sound output device 130 composed, for example, of a speaker. The sound processing part 114 outputs sound signals to the sound output device 130 in accordance with the sound output instructions from the control unit 111 executing processes in accordance with various control programs.

The graphics processing part 115 is connected to the display device 150 has the first image display part 151. The graphics processing part 115 distributes images to the frame memory 119 in accordance with the drawing instructions from the control unit 111 and also outputs video signals for displaying the images on the image display part 151 to the display device 150. The switching time for the images displayed according to the video signals is set to 30 seconds per frame, for example.

The recording medium 170 stored with programs etc. is inserted into the card slot 120. The recording medium 170 in the present embodiment is a semiconductor memory such as a writable flash memory. The communication interface 117 is connectable to another game machine wired or wirelessly, and also is connectable to a communication network such as the Internet. The machine body 110 can communicate with another game machine using the communication function of the communication interface 117.

The operation input part 121, the card slot 120 and the touch panel 140 are connected to the interface part 118. The interface part 118 stores, on the RAM 112, the instruction data from the operation input part 121 based on the player's (player's) operation and the instruction data based on the player's operation of the touch panel 140 using a touch pen 141 etc. Then, the control unit 111 executes an arithmetic processing in accordance with the instruction data stored in the RAM 112.

The touch panel 140 is stacked on the side of the display screen(s) of both or either of the image display part 151. Therefore, the control unit 111 recognizes input information depending on the operation inputs by a player, by managing/controlling the timing of display at the side of both or either of the image display part 151 where the touch panel 140 is stacked, the timing of operation of the touch panel 140 using the touch pen 141 etc. and the position coordinate. The display device 150 may configure the display screen with one image display part instead of having a plurality of image display parts such as the image display part 151.

The interface part 118 executes the processes, in accordance with the instructions from the control unit 111, such as storing the data showing the progress of the game stored in the RAM 112 in the recording medium 170 which is inserted into the card slot 120, or reading out the game data at the time of interruption stored in the recording medium 170 and transferring the data to the RAM 112.

Various data such as a control program for playing a game on the game machine is stored in the recording medium 170. The various data such as a control program stored in the recording medium 170 is read out by the control unit 111 through the card slot 120 where the recording medium 170 is inserted and is loaded into the RAM 112.

The control unit 111 executes various processes, in accordance with the control program loaded into the RAM 112, such as outputting drawing instructions to the graphics processing part 115, or outputting sound output instructions to the sound processing part 114. While the control unit 111 is executing the processing, the data occurring intermediately depending on the game progress is stored in the RAM 112 used as a working memory.

## Claims

1. A game system (1) which comprises a first online game server (11) which provides a first online game to a first type of apparatus (13a, 13b) through a communication network (15),
wherein the first server comprises a first database (16) which stores a first user's ID and the first user's game data related to the first user's ID, the game data being used in the first online game,
**characterized in that**,
the game system (1) further comprising a second online game server (21) which provides a second online game to a second type of apparatus (22a, 22b, 22c) and the first user's game data is used in the second online game,
thereby the first user's game data is shared by the first online game and the second online game.

2. A game system (1) in accordance with claim 1,
wherein the first type of apparatus (13a, 13b) are personal computers, apparatus for arcade games, or game apparatus for home products and the second type of apparatus (22a, 22b, 22c) are mobile terminal apparatus.

3. A game system (1) in accordance with claim 1,
wherein the first type of apparatus (13a, 13b) are personal computers, apparatus for arcade games, or game apparatus for home products and the second type of apparatus (22a, 22b, 22c) are mobile terminal apparatus that comprise a GPS part and the first online game uses the GPS data.

4. A game system (1) in accordance with claim 1,
wherein the first user's game data comprises experience data or game money which increases by playing either the first online game or the second online game.

5. A game system (1) in accordance with claim 1,
wherein the first online game and the second online game share a player character and the first user's game data which comprises current situation of the player character.

6. A game system (1) in accordance with claim 1,
wherein the first online game and the second online game share a first non-player character and the first user's game data which comprises current situation of the first non-player character.

7. A game system (1) in accordance with claim 1,
wherein the first online game and the second online game provide contracts that are used in the first online game and the second online game based on information which comprises accomplishments and statistics of the user, and
wherein the first user's game data comprises:
the first user's accomplishments; and
the first user's statistics,
thereby the contracts reflect progressiveness of the first online game and the second online game provide.
